# FASCICULE DE BREVET EUROPEEN

(11) **EP 1 721 815 B1**
(45) Date de publication et mention de la délivrance du brevet: **13.08.2008**
(21) Numéro de dépôt: 06290661.5
(22) Date de dépôt: 21.04.2006
(51) Int. Cl.: B62J 1/08

(54) **Dispositif de fixation d'une selle sur une tête de tige de selle**
Vorrichtung zur Befestigung eines Sattels auf dem Kopf einer Sattelstütze
Fixation device of a saddle on the head of the saddle pin.

(30) Priorité: 11.05.2005 FR 0504727
(43) Date de publication de la demande: 15.11.2006
(73) Titulaire: Look Cycle International, 58000 Nevers (FR)
(72) Inventeur: Beaulieu, Cyril, 59777 Euralille (FR)
(74) Mandataire: Laget, Jean-Loup

(56) Documents cités:
- FR-A- 2 535 279
- GB-A- 1 529 072
- US-A- 3 992 054
- US-A- 4 421 357
- US-A- 4 502 811
- US-A- 4 568 121

## Description

La présente invention concerne un dispositif de fixation d'une selle sur une tige de selle, en particulier sur une tête de tige de selle présentant à son extrémité haute une forme coudée.

Ce dispositif de fixation comporte dans sa forme la plus simple une première plaque constituant un organe de serrage inférieur fixé directement sur la tête de tige, et une deuxième plaque constituant un organe de serrage supérieur, chaque organe de serrage étant pourvu de deux rainures parallèles disposées en regard de rainures parallèles prévues sur l'organe de serrage opposé. Les rainures en regard reçoivent deux rails constitués par des fils métalliques fixés sur la face inférieure de la selle.

L'organe de serrage supérieur est relié à la tête de tige de selle par une vis de serrage qui passe par un alésage prévu dans la tête de tige de selle et par un alésage prévu dans l'organe de serrage inférieur. Cette vis de serrage se visse soit dans un alésage taraudé effectué sur la face inférieure de l'organe de serrage supérieur, soit dans un écrou sur la face supérieure de l'organe de serrage supérieur, et dans ce dernier cas, elle traverse un alésage dans celui-ci pour coopérer avec l'écrou.

Cependant, même si ce dispositif de fixation permet un certain réglage de la position de la selle d'environ 20 mm dans le sens longitudinal par le déplacement du dispositif le long de tronçons de rail qui sont parallèles l'un à l'autre, il ne permet pas l'inclinaison de la selle du fait que l'organe de serrage inférieur est fixé à demeure sur la tête de tige et ne peut pas être incliné.

Afin de pouvoir régler l'inclinaison de la selle, une solution consiste à prévoir sur la tête de tige de selle une surface incurvée, c'est-à-dire convexe ou concave, qui coopère avec une surface de forme complémentaire sur la face inférieure de l'organe de serrage inférieur qui dans ce cas est constitué par une pièce séparée et détachable.

Dans un autre dispositif de fixation simplifié, les organes de serrage inférieur et supérieur sont matérialisés par les deux moitiés d'un tube coupé dans le sens de sa longueur et comportant à ses extrémités des empreintes correspondant à la forme des rails de fixation de selle. Ces deux demi-tubes sont placés en vis-à-vis et emprisonnés par un collier de serrage circulaire fendu et une vis de serrage resserrant le collier.

Il est à noter que tous ces dispositifs de fixation déterminent une position longitudinale fixe pour les organes de serrage, ce qui limite le réglage longitudinal de la selle à la course des parties de rails de selle rectilignes et parallèles qui peuvent coulisser entre les organes de serrage lorsque ceux-ci sont desserrés.

Dernièrement est apparu un dispositif de fixation de selle permettant de couvrir une plage plus importante de réglage en longueur. Ce dispositif comporte un coulisseau déplaçable dans le sens longitudinal le long d'une glissière prismatique formée sur la tête de la tige de selle.

Ce coulisseau présente une face supérieure concave coopérant avec une surface complémentaire sur la face inférieure d'une plaque à deux rainures parallèles constituant un organe de serrage inférieur.

La tête de tige comporte sur sa face inférieure un évidement qui sert de logement à la tête d'une vis de serrage qui s'étend au travers de l'un de trois alésages espacés débouchant sur la face supérieure de la glissière pour traverser, dans cet ordre, un alésage effectué dans le coulisseau, une fente effectuée dans l'organe de serrage inférieur et une fente effectuée dans une plaque constituant un deuxième organe de serrage à deux rainures parallèles pour finalement coopérer avec un écrou.

Cet écrou présente une surface inférieure convexe cylindrique à axe transversal reçue dans un logement concave cylindrique de forme complémentaire qui est prévu sur la face supérieure de l'organe de serrage supérieur. Ainsi, la vis de serrage reste verticale alors que l'inclinaison de la selle peut être réglée. Le réglage de la position de la selle se fait d'une part comme d'habitude en laissant les rails sous la selle glisser dans les rainures des organes de serrage inférieur et supérieur, et d'autre part en insérant la vis dans l'un ou l'autre des trois perçages dans la tête de tige qui représentent une position reculée, une position médiane et une position avancée.

Un des inconvénients de ce dispositif est qu'il est lors de l'assemblage difficile de maintenir l'écrou de telle façon que son perçage soit placé verticalement pour recevoir l'extrémité de la vis de serrage. Dans la pratique, il est pour mettre la vis de serrage en place nécessaire de tourner l'organe de serrage supérieur de 90° par rapport à sa position d'utilisation et ensuite le retourner de 90° pour que les rainures des organes de serrage supérieur et inférieur soient parallèles les unes aux autres. Cet assemblage est rendu encore plus difficile lorsque la vis se trouve dans la position avancée près de la tige de selle.

Le dispositif de fixation d'une selle connu brevet du US4568121 est un dispositif d'un autre genre dans la mesure où il est incompatible avec des rails longitudinaux fixés sous une selle. Il comporte une plaque pratiquement horizontale soudée sur une tige de selle et présentant sur sa face supérieure des rainures transversales coopérant avec des nervures transversales sur la face inférieure d'une première pièce intercalaire. Celle-ci présente sur sa face supérieure une surface incurvée, également pourvue de rainures transversales qui coopèrent avec les nervures transversales sur la face inférieure d'une deuxième pièce intercalaire hémicylindrique. Les pièces sont reliées ensemble par une vis qui coopère avec un trou taraudé d'un élément de fixation hémicylindrique logé dans une rainure transversale de forme complémentaire sur la face supérieure de la deuxième pièce intercalaire, et fixé à l'intérieur de la selle. La vis s'étend par des trous oblongs alignés de la plaque, de la première pièce intercalaire et de la deuxième pièce. Même si ce dispositif permet un certain réglage de l'inclinaison de la selle, le réglage dans le sens longitudinal est très limité et ne peut pas être effectué en continu. Il est pratiquement indispensable de dévisser entièrement la vis pour faire les réglages, ce qui constitue un inconvénient supplémentaire.

D'une manière générale, l'assemblage de tous les dispositifs connus est plus ou moins difficile lorsque la selle est en place puisque d'une part l'accès est alors interdit par le dessus et l'espace disponible en dessous est très restreint en raison de la présence des rails et de la tige.

Dans le cas où en plus la vis est inclinée vers l'avant, l'approche de la clé de serrage en est rendue plus difficile à cause du risque d'interférence avec la tige de selle. La suppression de ce risque nécessite d'effectuer un évidement très important et très avancé dans la face inférieure de la tête de tige, ce qui nuit à la résistance, augmente l'encombrement latéral, et le cas échéant rend le moulage de la tige plus complexe.

Le but de l'invention est de remédier à ces inconvénients en proposant un dispositif de fixation de selle facile à assembler, léger, compact en hauteur et présentant une plage de réglage longitudinal importante.

L'objet de l'invention est un dispositif de fixation d'une selle sur une tête de tige de selle, comportant un organe de serrage inférieur et un organe de serrage supérieur, des rainures parallèles étant prévues dans ledit organe de serrage inférieur et disposées en regard de rainures parallèles prévues dans ledit organe de serrage supérieur, lesdites rainures en regard étant aptes à recevoir des rails longitudinaux fixés sur la face inférieure de la selle, ledit organe de serrage inférieur présentant une surface incurvée venant en appui sur une surface incurvée complémentaire prévue sur un coulisseau de manière à permettre le réglage de l'inclinaison de la selle, ledit coulisseau pouvant être déplacé dans le sens longitudinal le long d'une glissière prévue sur la tête de tige de selle, ledit organe de serrage supérieur étant relié à la tête de tige de selle par une vis de serrage traversant un premier trou de passage prévu dans la tête de tige de selle, un deuxième trou de passage prévu dans ledit coulisseau, et un troisième trou de passage prévu dans ledit organe de serrage inférieur, le premier trou de passage dans la tête de tige de selle étant une première fente longitudinale permettant le réglage en continu de la position longitudinale dudit coulisseau, le deuxième trou de passage dans ledit coulisseau étant une deuxième fente alignée sur ladite première fente et permettant l'inclinaison de ladite vis de serrage dans un plan longitudinal, et que ledit coulisseau présente des flancs latéraux en forme de secteurs de cône coopérant avec un logement central de forme complémentaire sur la face inférieure dudit organe de serrage inférieur.

Selon d'autres caractéristiques de l'invention:
-
- ladite première fente communique avec une rainure sur la face inférieure de la tête de tige de selle dont le fond est plan et parallèle à ladite glissière, ledit fond constituant une surface d'appui pour la tête de ladite vis de serrage, et la tige de la vis de serrage traverse une fente longitudinale d'une entretoise guidée dans ladite rainure et dont la face supérieure est plane pour glisser contre ledit fond ;
- ladite entretoise est une première entretoise dont la face inférieure est concave sphérique, et la tige de la vis de serrage traverse un trou de passage circulaire d'une deuxième entretoise présentant une face supérieure convexe sphérique complémentaire de ladite surface concave sphérique de ladite première entretoise, et une face inférieure plane coopérant avec la tête de ladite vis de serrage ;
- la surface incurvée dudit organe de serrage inférieur et dudit coulisseau, ainsi que la face sphérique desdites première et deuxième entretoises, sont centrées autour d'un même axe transversal horizontal, situé en dessous de ladite tête de vis de serrage ;
- les faces d'extrémité avant respectivement arrière de ladite première fente de la tête de tige de selle, de ladite deuxième fente dudit coulisseau et de la fente de ladite première entretoise sont alignées les unes sur les autres lorsque ledit coulisseau se trouve dans des positions extrêmes ;
- lesdites faces d'extrémité sont inclinées de manière à délimiter l'inclinaison de ladite vis de serrage dans les positions extrêmes de celle-ci.

D'autres caractéristiques et avantages de l'invention ressortiront de la description qui va suivre d'un mode de réalisation non limitatif de l'invention, en référence aux figures annexées dans lesquelles :
- la figure 1 est une vue éclatée en perspective d'un dispositif de fixation selon l'invention pour la fixation d'une selle sur une tête de selle;
- la figure 2 est une vue en perspective d'un coulisseau ;
- la figure 3 est une vue en perspective d'un organe de serrage inférieur ;
- la figure 4 est une vue en coupe transversale d'un dispositif de fixation selon l'invention monté sur une tête de tige de selle ;
- la figure 5 est une vue de dessous d'une tête de selle pourvue du dispositif de la figure 4 ;
- la figure 6 est une vue en coupe longitudinale du dispositif de fixation selon l'invention monté sur une tête de tige de selle, le dispositif se trouvant dans une position extrême reculée ;
- la figure 7 est une vue en coupe longitudinale du dispositif de fixation selon l'invention monté sur une tête de tige de selle, le dispositif se trouvant dans une position extrême avancée.

Dans les figures, les éléments identiques ou équivalents porteront les mêmes signes de référence.

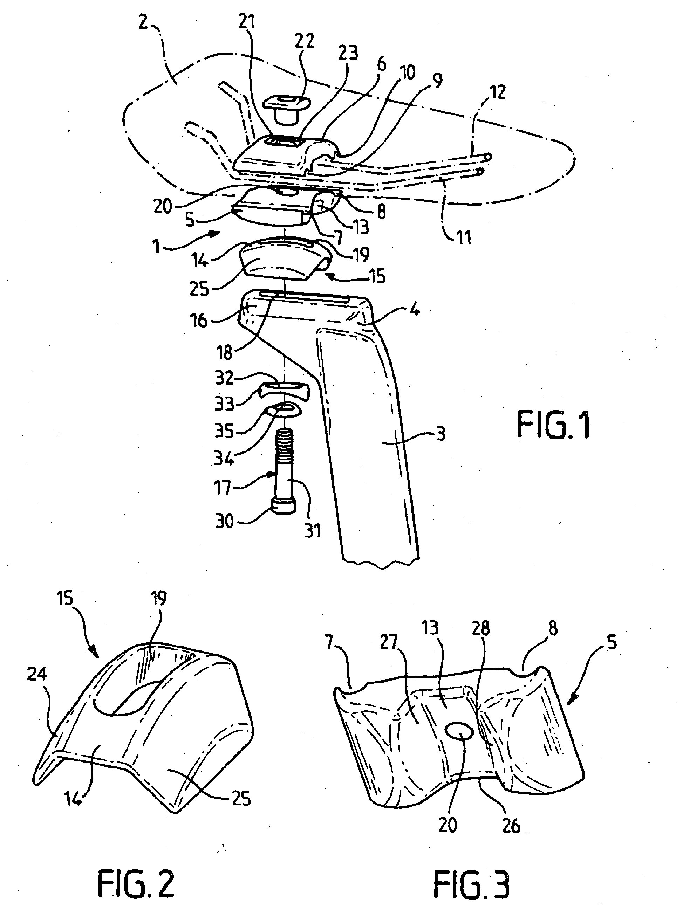

La figure 1 montre dans une vue d'ensemble tous les éléments constitutifs d'un dispositif de fixation 1 selon l'invention apte à fixer une selle 2 (montrée schématiquement en tiretés) sur une tige de selle 3 et plus particulièrement sur une tête de tige de selle coudée 4.

De manière classique en soi, le dispositif de fixation 1 comporte un organe de serrage inférieur 5 et un organe de serrage supérieur 6. L'organe de serrage inférieur 5 est formé par une plaque comportant sur sa face supérieure deux rainures parallèles 7, 8 disposées en regard de deux rainures parallèles 9, 10 prévues sur la face inférieure de l'organe de serrage supérieur 6, également formé par une plaque.

Les rainures en regard 7, 9 respectivement 8, 10 des organes de serrage inférieur et supérieur 5, 6 sont aptes à recevoir entre elles des rails longitudinaux 11, 12 fixés sur la face inférieure de la selle 2. Ces rails 11, 12, lesquels sont montrés très schématiquement à la figure 1, sont ainsi destinés à être serrés entre les organes de serrage inférieur et supérieur 5, 6 de manière à retenir la selle sur la tête de tige de selle 4 tout en permettant un certain réglage de la position de la selle dans le sens longitudinal de l'ordre de 20 mm lorsque les rails 11, 12 sont desserrés.

L'organe de serrage inférieur 5 présente sur sa face inférieure une surface incurvée concave 13 venant en appui sur une surface incurvée convexe complémentaire 14 d'un coulisseau 15, ces surfaces incurvées permettant ainsi le réglage de l'inclinaison de la selle.

Le coulisseau 15 peut être déplacé dans le sens longitudinal le long d'une glissière prismatique 16 prévue sur la tête de tige de selle 4. Le coulisseau permet ainsi un réglage supplémentaire de la position de la selle dans le sens longitudinal.

L'organe de serrage supérieur 5 est relié à la tête de tige de selle 4 par une vis de serrage 17 traversant un premier trou de passage 18 prévu dans la tête de tige de selle 4, un deuxième trou de passage 19 dans le coulisseau 15, et un troisième trou de passage 20 dans l'organe de serrage inférieur 5. Dans l'exemple illustré, l'organe de serrage supérieur 6 est en un matériau composite et l'extrémité filetée de la vis de serrage 17 traverse en outre un trou de passage 21 dans cet organe de serrage supérieur pour se visser dans le taraudage d'un insert 22 reçu dans un logement 23 prévu sur la face supérieure de cet organe 6. Dans le cas où l'organe de serrage supérieur 6 est en métal, un trou taraudé peut être prévu directement sur la face inférieure de l'organe de serrage supérieur.

Selon une caractéristique importante de l'invention, le trou de passage 18 dans la tête de tige de selle 4 est une première fente longitudinale permettant le réglage en continu de la position longitudinale du coulisseau 15, alors que le trou de passage 19 dans celui-ci est une deuxième fente alignée sur la première fente et permettant l'inclinaison de la vis de serrage 17 dans un plan longitudinal.

Selon une caractéristique avantageuse de l'invention, le coulisseau 15 présente des flancs latéraux 24, 25 en forme de secteurs de cône coopérant avec un logement central 26 sur la face inférieure de l'organe de serrage inférieur 5, ce logement présentant des côtés latéraux 27, 28 de forme complémentaire. Ces surfaces en forme de secteurs de cône permettent de faire pivoter la selle 2 dans un plan sensiblement horizontal.

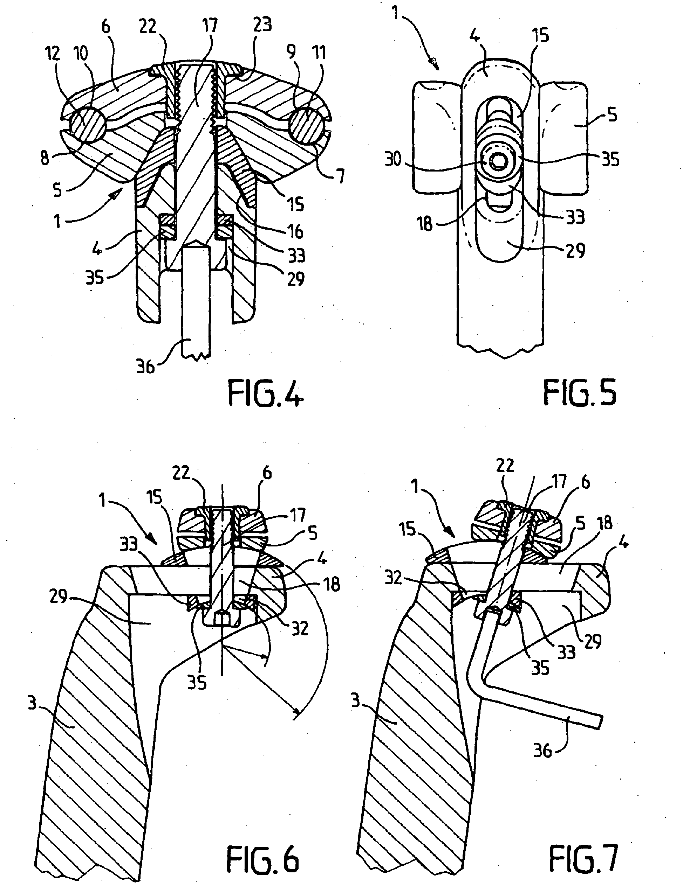

La première fente 18 dans la tête de tige de selle 4 communique par ailleurs avec une rainure 29 (voir figures 4 et 5) sur la face inférieure de celle-ci. Le fond de cette rainure 29 est plan et constitue une surface d'appui pour la tête 30 de la vis de serrage 17. Selon une autre caractéristique de l'invention, la tige 31 de la vis de serrage 17 traverse une fente longitudinale 32 d'une entretoise 33 guidée dans la rainure 29 et dont la face supérieure est plane pour glisser contre le fond de la rainure.

L'entretoise 33 est une première entretoise dont la face inférieure est concave sphérique et la tige de vis 31 traverse en outre un trou de passage cylindrique 34 d'une deuxième entretoise 35 présentant une face supérieure convexe sphérique complémentaire de la surface concave sphérique de la première entretoise 33, et une face inférieure plane coopérant avec la tête 30 de la vis de serrage 17.

De préférence, la surface inférieure incurvée de l'organe de serrage inférieur 5, la surface supérieure incurvée du coulisseau, ainsi que la face sphérique des première et deuxième entretoises 33, 35, sont centrées autour d'un même axe transversal horizontal, situé en dessous de la tête 30 de la vis de serrage 17 (voir figure 6).

Par ailleurs, les faces d'extrémité avant respectivement arrière de la première fente 18 de la tête de tige de selle 4, de la deuxième fente 19 du coulisseau 15 et de la fente 32 de la première entretoise 33 sont alignées les unes sur les autres lorsque le coulisseau 15 se trouve dans des positions extrêmes. Ces faces d'extrémités sont par ailleurs avantageusement inclinées de manière à délimiter l'inclinaison de la vis de serrage 17 dans les positions extrêmes de celle-ci.

Grâce à la configuration proposée par l'invention, la tête de vis 30 reste pratiquement dans la même position longitudinale quelle que soit son inclinaison et cela lui évite de se trouver dans une position trop avancée, ce qui serait néfaste à l'introduction de la clé de serrage 36. La figure 7 illustre que même dans cette position extrême avancée, la tête de vis 30 reste accessible sans aucune difficulté. Il ressort par ailleurs des figures 6 et 7 que la tête de vis 30 ne change pratiquement pas de position longitudinale lorsque l'inclinaison de la selle est modifiée.

Par ailleurs, lorsqu'on serre la vis de serrage 17 en position inclinée, ce qui est pratiquement toujours le cas car les rails de selle 11, 12 ne se trouvent presque jamais à l'horizontale, les différents éléments restent alignés sur le même axe et viennent se bloquer dans cette position d'inclinaison et cela selon le phénomène décrit ci-dessous.

Dans le cas où la vis de serrage 17 est inclinée par rapport à la normale aux rails 11, 12, l'effort de rapprochement de la vis lors de son serrage a tendance à ramener les éléments selon cette normale correspondant sensiblement à la verticale, en raison des efforts transversaux générés par l'inclinaison de la ligne d'action de la vis de serrage par rapport aux faces d'appui des éléments à serrer, c'est-à-dire les faces d'appui du coulisseau 15 sur la glissière 16 d'une part, et la face d'appui de la première entretoise 33 dans le fond de la rainure 29 d'autre part. Mais dans le même temps, les faces d'appui incurvées ou sphériques des différents éléments, de haut en bas : l'organe de serrage inférieur 5, le coulisseau 15 et les première et deuxième entretoises 33, 35, ont tendance, par le fait qu'ils sont centrés sur le même axe transversal, à maintenir tout l'ensemble aligné dans sa position initiale.

Ces efforts antagonistes se neutralisent en introduisant transversalement à la tige de vis deux flexions opposées similaires à une contrainte de cisaillement et appliquées aux niveaux des deux plans de glissement.

La nouvelle géométrie définie par l'invention permet de réduire l'encombrement en hauteur du dispositif, ce qui est d'autant plus important du fait que l'espace disponible est relativement réduit.

Ainsi, une tête de tige de selle pourvue du dispositif de fixation selon l'invention, dont les éléments sont faciles à réaliser, présente des caractéristiques très avantageuses en matière de commodité d'utilisation, légèreté, hauteur et plage de réglage longitudinale importante.

## Revendications

1. Dispositif de fixation d'une selle (1) sur une tête de tige de selle (4), comportant un organe de serrage inférieur (5) et un organe de serrage supérieur (6), des rainures parallèles (7, 8) étant prévues dans ledit organe de serrage inférieur (5) et disposées en regard de rainures parallèles (9, 10) prévues dans ledit organe de serrage supérieur (6), lesdites rainures en regard (7, 9; 8, 10) étant aptes à recevoir des rails longitudinaux (11, 12) fixés sur la face inférieure de la selle (1), ledit organe de serrage inférieur (5) présentant une surface incurvée venant en appui sur une surface incurvée complémentaire prévue sur un coulisseau (15) de manière à permettre le réglage de l'inclinaison de la selle, ledit coulisseau (15) pouvant être déplacé dans le sens longitudinal le long d'une glissière (16) prévue sur la tête de tige de selle (4), ledit organe de serrage supérieur (6) étant relié à la tête de tige de selle par une vis de serrage (17) traversant un premier trou de passage (18) prévu dans la tête de tige de selle (4), un deuxième trou de passage (19) prévu dans ledit coulisseau (15), et un troisième trou de passage (20) prévu dans ledit organe de serrage inférieur (5), le premier trou de passage (18) dans la tête de tige de selle (4) étant une première fente longitudinale permettant le réglage en continu de la position longitudinale dudit coulisseau (15), et le deuxième trou de passage (19) dans ledit coulisseau étant une deuxième fente alignée sur ladite première fente (18) et permettant l'inclinaison de ladite vis de serrage (17) dans un plan longitudinal, **caractérisé par le fait que** ledit coulisseau (15) présente des flancs latéraux (24, 25) en forme de secteurs de cône coopérant avec un logement central (26) de forme complémentaire sur la face inférieure dudit organe de serrage inférieur (5).

2. Dispositif de fixation selon la revendication 1, dans lequel ladite première fente (18) communique avec une rainure (29) sur la face inférieure de la tête de tige de selle (4) dont le fond est plan et parallèle à ladite glissière (16), ledit fond constituant une surface d'appui pour la tête (30) de ladite vis de serrage (17), **caractérisé par le fait que** la tige (31) de la vis de serrage (17) traverse une fente longitudinale (32) d'une entretoise (33) guidée dans ladite rainure (29) et dont la face supérieure est plane pour glisser contre ledit fond.

3. Dispositif de fixation selon la revendication 2, **caractérisé par le fait que** ladite entretoise (33) est une première entretoise dont la face inférieure est concave sphérique, et que la tige (31) de la vis de serrage (17) traverse un trou de passage circulaire (34) d'une deuxième entretoise (35) présentant une face supérieure convexe sphérique complémentaire de ladite surface concave sphérique de ladite première entretoise (33), et une face inférieure plane coopérant avec la tête (30) de ladite vis de serrage (17).

4. Dispositif de fixation selon la revendication 3, **caractérisé par le fait que** la surface incurvée dudit organe de serrage inférieur (5) et dudit coulisseau (15), ainsi que la face sphérique desdites première et deuxième entretoises (33, 35), sont centrées autour d'un même axe transversal horizontal, situé en dessous de ladite tête de vis de serrage (30).

5. Dispositif de fixation selon l'une quelconque des revendications 2 à 4, **caractérisé par le fait que** les faces d'extrémité avant respectivement arrière de ladite première fente (18) de la tête de tige de selle (4), de ladite deuxième fente (19) dudit coulisseau (15) et de la fente (32) de ladite première entretoise (33) sont alignées les unes sur les autres lorsque ledit coulisseau (15) se trouve dans des positions extrêmes.

6. Dispositif de fixation selon la revendication 5, **caractérisé par le fait que** lesdites faces d'extrémité sont inclinées de manière à délimiter l'inclinaison de ladite vis de serrage (17) dans les positions extrêmes de celle-ci.

## Claims

1. Fixation device of a saddle (1) on the head (4) of a saddle pillar, comprising a lower gripping member (5) and an upper gripping member (6), parallel grooves (7, 8) being provided in said lower gripping member (5) and disposed opposite parallel grooves (9, 10) provided in said upper gripping member (6), said facing grooves (7, 9; 8, 10) being designed to receive longitudinal rails (11, 12) fixed onto the lower surface of the saddle (1), said lower gripping member (5) having a curved surface bearing against a complementary curved surface provided on a slider (15) so as to permit the adjustment of the inclination of the saddle, said slider (15) being designed to move in longitudinal direction along a slideway (16) provided on the saddle pillar head (4), said upper gripping member (6) being connected to the saddle pillar head by a gripping screw (17) passing through a first hole (18) provided in the saddle pillar head (4), a second hole (19) provided in said slider (15), and a third hole (20) provided in the said lower gripping member (5), the first hole (18) in the saddle pillar head (4) being a first longitudinal slot permitting the continuous adjustment of the longitudinal position of said slider (15) and the second hole (19) in said slider being a second slot aligned with said first slot (18) and permitting the inclination of said gripping screw (17) in a longitudinal plane, **characterised by** the fact that said slider (15) has lateral flanks (24, 25) in the form of conical sectors cooperating with a central recess (26) with a complementary shape on the lower surface of said lower gripping member (5).

2. Fixation device according to claim 1, in which the said first slot (18) communicates with a groove (29) on the lower surface of the saddle pillar head (4), the bottom of which is flat and parallel to said slideway (16), said bottom having a bearing surface for the head (30) of said gripping screw (17), **characterised by** the fact that the shank (31) of the gripping screw (17) passes through a longitudinal slot (32) of a spacer (33) guided in said groove (29) and the upper surface of which is flat to slide against said bottom.

3. Fixation device according to claim 2, **characterised by** the fact that said spacer (33) is a first spacer the lower surface of which is spherical concave, and the shank (31) of the gripping screw (17) passes through a circular hole (34) of a second spacer (35) having a spherical convex upper surface complementary to said spherical concave surface of said first spacer (33), and a lower flat surface cooperating with the head (30) of said gripping screw (17).

4. Fixation device according to claim 3, **characterised by** the fact that the curved surface of said lower gripping member (5) and of said slider (15), as well as the spherical surface of said first and second spacers (33, 35), are centred about the same horizontal transverse axis, located below said gripping screw head (30).

5. Fixation device according to any one of claims 2 to 4, **characterised by** the fact that the respective front and rear end surfaces of said first slot (18) of the saddle pillar head (4), of said second slot (19) of said slider (15) and of the slot (32) of said first spacer (33) are aligned with each other when said slider (15) is located in its end positions.

6. Fixation device according to claim 5, **characterised by** the fact that said end surfaces are inclined so as to delimit the inclination of said gripping screw (17) in the end positions of the latter.

## Patentansprüche

1. Vorrichtung zur Befestigung eines Sattels (1) auf einem Sattelstützenkopf (4), die ein unteres Klemmorgan (5) und ein oberes Klemmorgan (6) umfasst, wobei in diesem unteren Klemmorgan (5) parallele Rillen (7, 8) vorgesehen sind, die parallelen Rillen (9, 10) gegenüber angeordnet sind, welche in diesem oberen Klemmorgan (6) vorgesehen sind, wobei diese einander gegenüberliegenden Rillen (7, 9; 8, 10) geeignet sind, Längsschienen (11, 12) aufzunehmen, die an der Unterseite des Sattels (1) befestigt sind, wobei das untere Klemmorgan (5) eine gekrümmte Oberfläche aufweist, die in Anlage an einer komplementär gekrümmten Oberfläche kommt, welche an einem Gleitelement (15) vorgesehen ist, so dass die Einstellung der Neigung des Sattels ermöglicht wird, wobei das Gleitelement (15) in Längsrichtung entlang einer Gleitschiene (16) verschoben werden kann, die an dem Sattelstützenkopf (4) vorgesehen ist, wobei das obere Klemmorgan (6) mit dem Sattelstützenkopf durch eine Klemmschraube (17) verbunden ist, die durch ein in dem Sattelstützenkopf (4) vorgesehenes erstes Durchgangsloch (18), durch ein in dem Gleitelement (15) vorgesehenes zweites Durchgangsloch (19) und durch ein in dem unteren Klemmorgan (5) vorgesehenes drittes Durchgangsloch (20) verläuft, wobei das erste Durchgangsloch (18) in dem Sattelstützenkopf (4) ein erster Längsschlitz ist, der das stufenlose Verstellen der Längsposition des Gleitelements (15) ermöglicht, und wobei das zweite Durchgangsloch (19) in diesem Gleitelement ein zweiter Schlitz ist, der auf den ersten Schlitz (18) ausgerichtet ist und die Neigung der Klemmschraube (17) in einer Längsebene ermöglicht,
**dadurch gekennzeichnet,**
**dass** dieses Gleitelement (15) Seitenflanken (24, 25) mit der Form von Kegelsektoren aufweist, die mit einer zentralen Aufnahme (26) von komplementärer Form an der Unterseite des unteren Klemmorgans (5) zusammenwirken.

2. Befestigungsvorrichtung nach Anspruch 1, bei der der erste Schlitz (18) mit einer Rille (29) an der Unterseite des Sattelstützenkopfs (4) in Verbindung steht, deren Boden eben ist und parallel zu der Gleitschiene (16) verläuft, wobei dieser Boden eine Auflagefläche für den Kopf (30) der Klemmschraube (17) bildet,
**dadurch gekennzeichnet,**
**dass** der Schaft (31) der Klemmschraube (17) durch einen Längsschlitz (32) eines Zwischenstücks (33) verläuft, die in der Rille (29) geführt wird und deren Oberseite eben ist, um an diesem Boden entlang zu gleiten.

3. Befestigungsvorrichtung nach Anspruch 2,
**dadurch gekennzeichnet,**
**dass** dies Zwischenstück (33) ein erstes Zwischenstück darstellt, deren Unterseite konkav kugelförmig ist, und dass der Schaft (31) der Klemmschraube (17) durch ein kreisförmiges Durchgangsloch (34) eines zweiten Zwischenstücks (35) verläuft, die eine konvex kugelförmige Oberseite aufweist, die komplementär zu der genannten konkav kugelförmigen Oberfläche des ersten Zwischenstücks (33) geformt ist, sowie eine ebene Unterseite aufweist, die mit dem Kopf (30) der Klemmschraube (17) zusammenwirkt.

4. Befestigungsvorrichtung nach Anspruch 3,
**dadurch gekennzeichnet,**
**dass** die gekrümmte Oberfläche des unteren Klemmorgans (5) und des Gleitelements (15) sowie die kugelförmige Oberfläche der ersten und zweiten Zwischenstücke (33, 35) auf einer und derselben horizontalen Querachse zentriert sind, die sich unterhalb des Klemmschraubenkopfs (30) befindet.

5. Befestigungsvorrichtung nach einem der Ansprüche 2 bis 4,
**dadurch gekennzeichnet,**
**dass** die jeweiligen vorderen und hinteren Endseiten des ersten Schlitzes (18) des Sattelstützenkopfs (4), des zweiten Schlitzes (19) des Gleitelements (15) und des Schlitzes (32) des ersten Zwischenstücks (33) aufeinander ausgerichtet sind, wenn sich dieses Gleitelement (15) in Endpositionen befindet.

6. Befestigungsvorrichtung nach Anspruch 5,
**dadurch gekennzeichnet,**
**dass** diese Endseiten dergestalt geneigt sind, dass sie die Neigung der Klemmschraube (17) in deren Endstellungen begrenzt.
